# EUROPEAN PATENT SPECIFICATION

(11) **EP 3 478 623 B1**
(45) Date of publication and mention of the grant of the patent: **01.04.2020**
(21) Application number: 17734295.3
(22) Date of filing: 29.06.2017
(51) Int. Cl.: B66D 1/28, B63B 21/16, F16C 23/02, F16C 43/02, F16C 31/02, F16C 33/04

(54) **EXCHANGE OF BUSHING IN DRUM**
AUSTAUSCH EINER BUCHSE IN EINER TROMMEL
ÉCHANGE DE DOUILLE DANS UN TAMBOUR

(30) Priority: 29.06.2016 NO 20161079
(43) Date of publication of application: 08.05.2019
(73) Proprietor: Macgregor Norway AS, 4623 Kristiansand (NO)
(72) Inventor: SIMONSEN, Ole Johnny, N-4812 Kongshavn (NO)
(74) Representative: Onsagers AS
(86) International application number: PCT/EP2017/066121
(87) International publication number: WO 2018/002218

(56) References cited:
- CN-A- 104 555 675
- SU-A1- 983 027
- US-A- 2 028 532

## Description

### Technical Field:

The present invention relates to a drum assembly as defined in the preamble of claim 1, and a method for exchanging a bushing of the drum assembly.

### Background and prior art:

Bushings or bearings in winches wear down and must be exchanged at irregular periods, including periods where the winches are on a vessel at open sea. In order to allow exchanges of these bushings or bearings, the winch drum must be removed from its main shaft. However, due to the heavy weight of the winch drum, typically 2-5 tons, it is basically impossible to perform such an exchange operation at open sea without damaging the drum and/or the shaft. The result is very expensive repairs.

Methods for exchange of bearings in engines with rotating shafts are known. In patent publication US 4,810,175 the bearing of a motor shaft is accessed and exchanged by sliding the bearing axially on the motor shaft after removing exterior parts and then disassembling the bearing in two arcuate parts. A similar method of splitting the bearings and their exterior parts during exchange may be found in WO 90/14524 US 2 028 532 A discloses a drum assembly comprising the features of the preamble of claim 1.

However, even if the above mentioned prior art avoid a complete dissemblance of the bearing carrying structure, the method described still involves fairly complex operations involving removals of overlying parts, making exchange of bushings or bearings at open sea challenging.

It is thus an object of the present invention to provide a drum assembly and a method allowing exchange of bushings in drums with a minimum need of disassembly.

### Summary of the invention:

The present invention is set forth and characterized in the main claims, while the dependent claims describe other characteristics of the invention.

In particular, the invention concerns a drum assembly for a mooring winch comprising a rotatable drum shaft having a rotational axis along the drum shaft, a drum support comprising a first pedestal supporting a first axial end of the drum shaft and a second pedestal supporting a second axial end of the drum shaft and an axially slidable drum arranged between the first and second pedestals. Both a first axial end of the drum and a second axial end of the drum is supported on a bushing axially surrounding the drum shaft. A drum length difference (L,L') corresponding to the minimum distance between the two pedestals minus the axial length of the drum is equal or longer than the axial length of each bushing, i.e. the length of the bushing along the drum shaft when assembled. The term 'bushing' is hereinafter defined as any support able to carry the weight of the drum onto the drum shaft. This definition also includes other objects surrounding the drum shaft such as radial bearings and the like.

According to the invention, each bushing is divided into a plurality of arcuated bushing parts, thereby rendering easy removal from the drum shaft possible, i.e. without necessitating use of any destructive force such as cutting, dissolving, etc.

In another advantageous embodiment at least one of the bushings comprises a cylindrical section (axial part) and a radial section (stopper) oriented perpendicular to the cylindrical section, wherein the cylindrical section is arranged between the drum and the drum shaft and the radial section abuts the adjacent axial end of the drum.

In yet another advantageous embodiment the axial ends of the drum displays one or more threaded cavities and each of the bushings displays through-going apertures being in alignment with the threaded cavities. These apertures may conveniently be arranged in the radial section of the bushing. A threaded bolt or screw is inserted in at least one of the aligned cavity and aperture at each axial ends of the drum, thereby creating one or more removable fixations of the bushings to the drum.

In yet another advantageous embodiment the axial ends of the drum shaft are supported on the first and second pedestals, respectively, via radial bearings.

In yet another advantageous embodiment at least one spacer is arranged on the drum shaft within the open area between the drum and the pedestals, the at least one spacer having a total length equal to, or nearly equal to, the drum length difference (L,L').

In yet another advantageous embodiment the drum is in a position where the first axial end of the drum and/or its respective bushing abuts the first pedestal and that at least one spacer is arranged on the drum shaft within the area between the second axial end of the drum and the second pedestal.

In yet another advantageous embodiment the at least one spacer is divided into a plurality of arcuated spacer parts, thereby rendering easy removal from the drum shaft possible for the same reasons as explained above.

The invention also concerns a method for exchanging a bushing arranged between a drum and a drum shaft of a drum assembly in accordance with any one of the above mentioned features.

The method comprises the following sequential steps:
A. removing at least one spacer arranged on the drum shaft in the area between the drum and the pedestals,
B. sliding the bushing arranged beneath the second axial end of the drum towards the nearest pedestal,
C. removing the bushing from the drum shaft,
D. sliding the drum across the area previously covered by the at least one spacer,
E. sliding the other bushing arranged beneath the first axial end of the drum towards the nearest pedestal and
F. removing the other bushing from the drum shaft.

In an advantageous embodiment each bushing is divided into a plurality of arcuated bushing parts, wherein the removal of the bushings from the drum shaft in steps C and F is performed by removing one and one of these bushing parts entirely from the drum shaft.

In another advantageous embodiment the at least one spacer is divided into a plurality of spacer parts enabling removal of the at least one spacer in step A by removing one and one of these spacer parts entirely from the drum shaft.

In another advantageous embodiment the first axial end of the drum is in abutment, or near abutment, with the first pedestal and the at least one spacer is arranged on the drum shaft and is covering the area between the second axial end the drum and the second pedestal, wherein the at least one spacer is divided into a plurality of spacer parts enabling removal of the at least one spacer in step A by removing one and one of these spacer parts from the drum shaft.

In another advantageous embodiment step D involves sliding the drum from the position where the first axial end of the drum is in abutment, or near abutment, with the first pedestal to a position where the second axial end of the drum is in abutment, or near abutment, with the second pedestal.

In another advantageous embodiment steps C and F also comprise inserting a new and/or modified bushing as replacement for the removed bushing.

In the following description, numerous specific details are introduced to provide a thorough understanding of embodiments of the drum assembly and method. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

### Brief description of the drawings:

Fig. 1A is a schematic side view of a drum assembly in accordance with the invention, without a spacer.
Fig. 1B is a schematic side view of a part of the drum assembly in in fig. 1A comprising a bushing.
Fig. 1C is a schematic side view drawing of a part of the drum assembly in fig. 1A comprising a bushing and the drum framework.
Fig. 2A is a perspective side view of a drum assembly in accordance with the invention, the bushing being partly disassembled.
Fig. 2B is a schematic drawing of a perspective side view of a drum assembly in accordance with the invention, the bushing being partly disassembled.
Fig. 3 shows the drum assembly of fig. 1 with the bushing slid out from beneath the drum,
Fig. 4 shows the drum assembly of fig. 1 with the bushing slid axially into the area of the removed spacer,
Fig. 5 shows the drum assembly of fig. 1 with the drum slid axially towards the spacer end.

### Detailed description of the invention

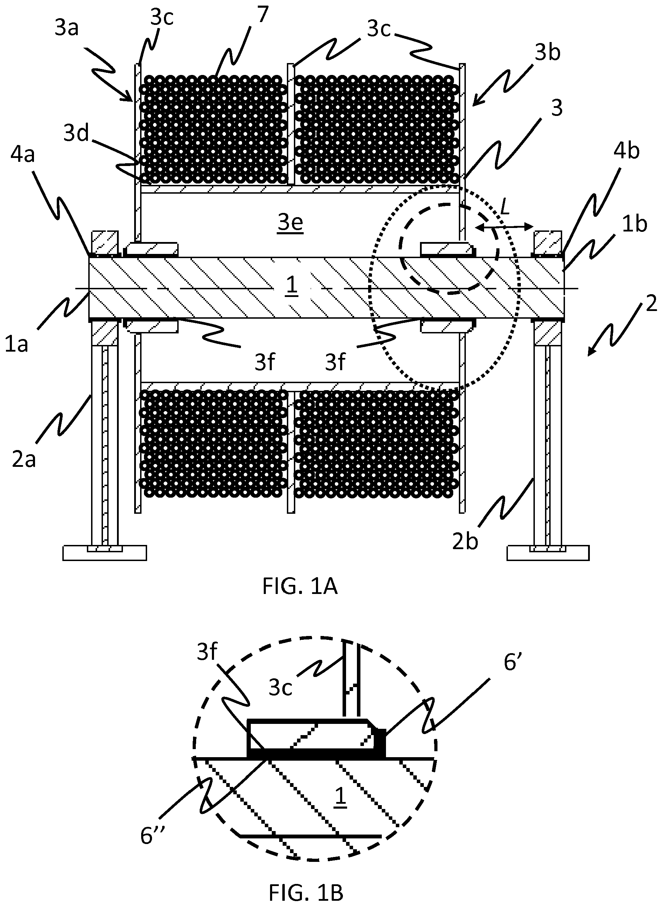

Figs. 1A, 3, 4 and 5 show the main components of a drum assembly suitable for winching mooring cables / ropes during mooring operations on a vessel at open sea. With particular reference to fig. 1A the drum assembly comprises a drum shaft 1, a drum support 2 with a first and second bearing pedestal 2a,2b arranged at each axial end 1a,1b of the drum shaft 1 and a drum 3 rotatably supported around the drum shaft 1 and arranged between the two bearing pedestals 2a,2b. The distance between the first axial end 3a of the drum 3 and the second axial end 3b of the drum 3 is less than the axial length constrained by the pedestals 2a,2b, for example less than 90 %.

In order to enable rotatable movement, the drum shaft 1 is supported on the pedestals 2a,2b via bearings 4a,4b having rotational axis congruent to the axial axis of the drum shaft 1.

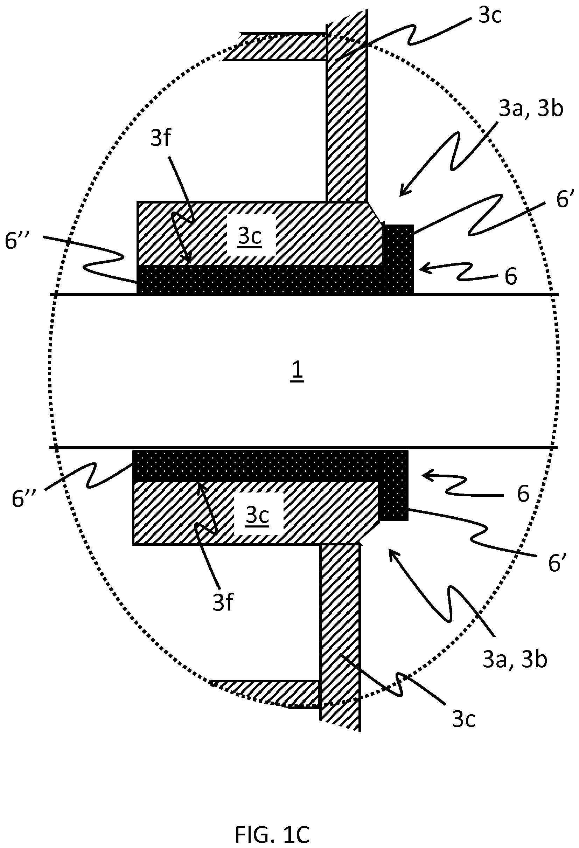

The drum 3 includes a drum framework 3c for axially constraining cables or ropes 7 being winded onto a winding surface 3d of the drum 3. In the particular embodiment of fig. 1A, the drum framework 3c comprises three radially extending plates. The drum 3 further comprises a drum base 3e having the winding surface 3d facing the winding area of the drum 3 and a drum shaft surface 3f facing the drum shaft 1. In the embodiment shown in fig. 1A-C and fig. 3-5 the drum base 3e is hollow and the figures show that the drum framework 3c comprises the drum shaft surfaces 3f facing the drum shaft 1. The drum shaft surface 3f is supported on bushings 6, bearings or the like at both axial ends 3a,3b of the drum 3. The area of one of the bushings 6 marked with a dashed small circled is shown in more detail in fig. 1B. As seen herein, the bushing 6 includes an axial part 6" and a stopper 6' protruding radially out from the drum shaft 1 when squeezed between the drum shaft surface 3f of the drum 3 and the radial surface of the drum shaft 1. The abutment of the stopper 6' towards the drum's 3 framework 3c ensures that the bushings 6 remain at or near the drums 3 axial ends 3a,3b. The area of one of the bushings 6 marked with a dashed big circle in fig. 1A is shown in more detail in fig. 1C. As described above (fig. 1B), the bushing 6 includes the axial part 6" and the stopper 6' protruding radially out from the drum shaft 1 when squeezed between the drum shaft surface 3f of the drum framework 3c and the radial surface of the drum shaft 1.

The difference in axial length between the drum 3 and the space between the bearing pedestals 2a,2b, indicated in fig. 1A, 3-5 by the letter L, allows the operator to have easy access to at least one of the bushings 6 for performing exchange and/or repair operations.

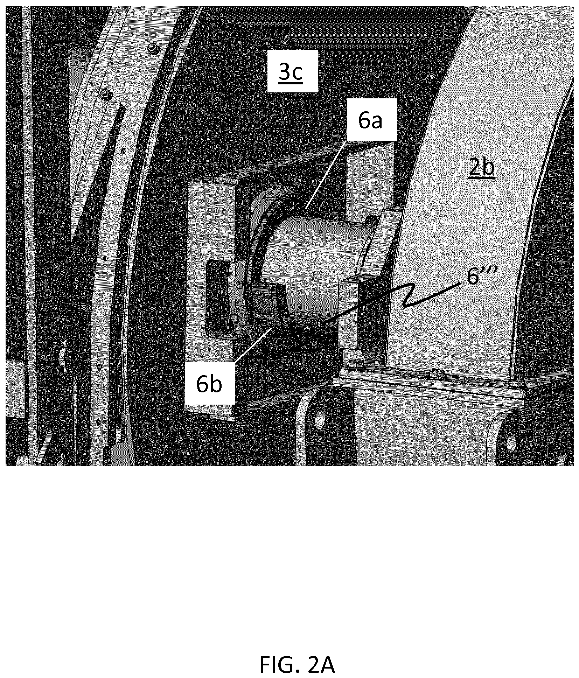

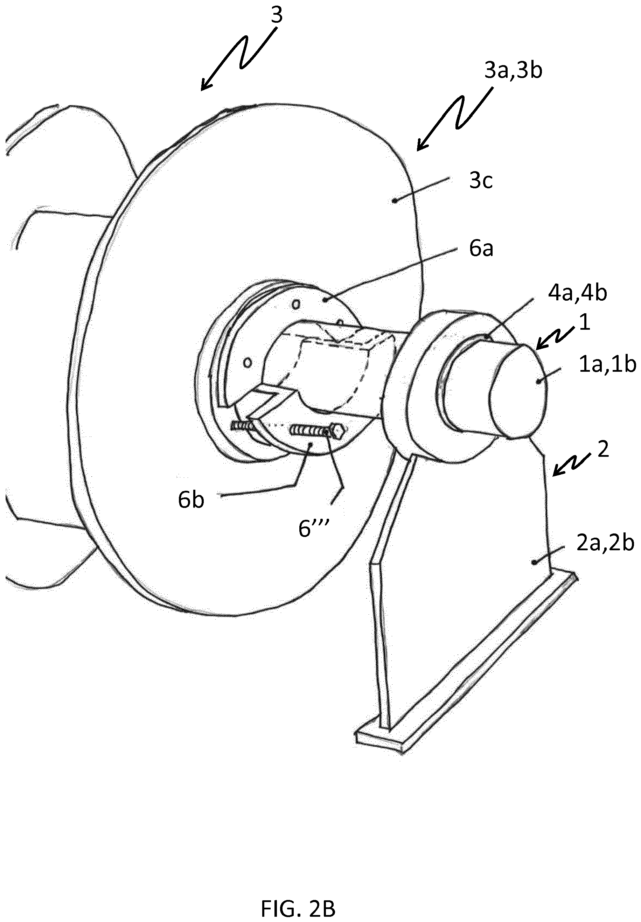

An example of an exchange of bushings 6 is illustrated in fig. 2A and fig. 2B. The bushing 6 comprises a plurality of arcuate bushing parts 6a,6b surrounding the drum shaft 1 and fixed with bolts or screws 6''' to the drum framework 3c. The lower part 6b of in total two arcuate bushings parts 6a,6b is halfway slid out along the drum shaft 1 after partly loosing the relevant bolt 6"'. After the relevant bolt 6''' has been removed from the drum framework 3c, the lower part 6b can be completely removed. The same procedure is performed for the other part 6a in order to completely remove the bushing 6 from beneath the drum 3. Due to the splitting of the bushing into several circumferential parts, the operator may then easily remove the bushing completely from the drum shaft 1.

Note that the term 'bushing' should not be interpreted narrowly. It may involve any kind of cylinders resisting the pressure exerted by the drum 3, for example radial bearings.

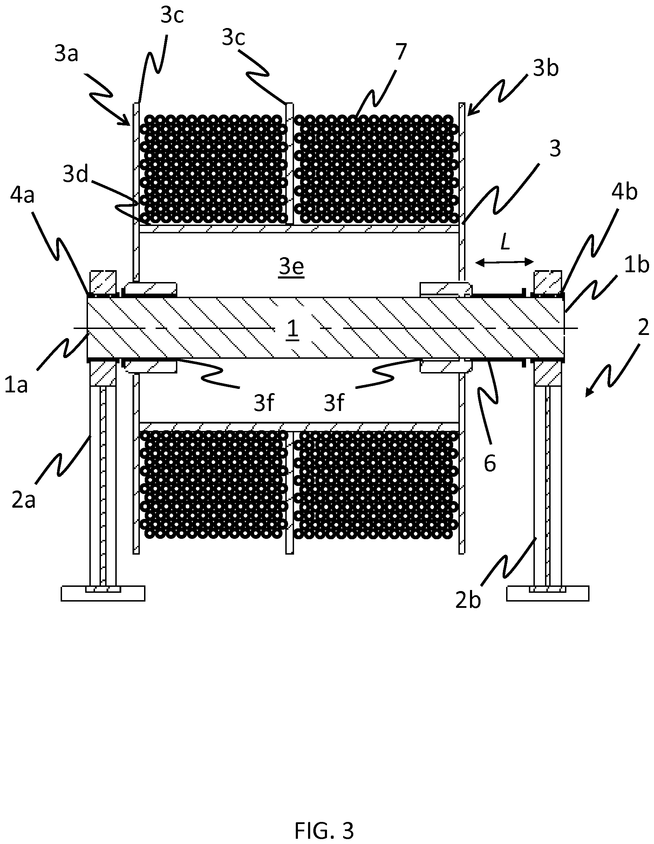

Fig. 3 shows the drum assembly after having slid the bushing 6 entirely from beneath the drum 3 and into the open space between one of the pedestals 2b and the drum framework 3c.

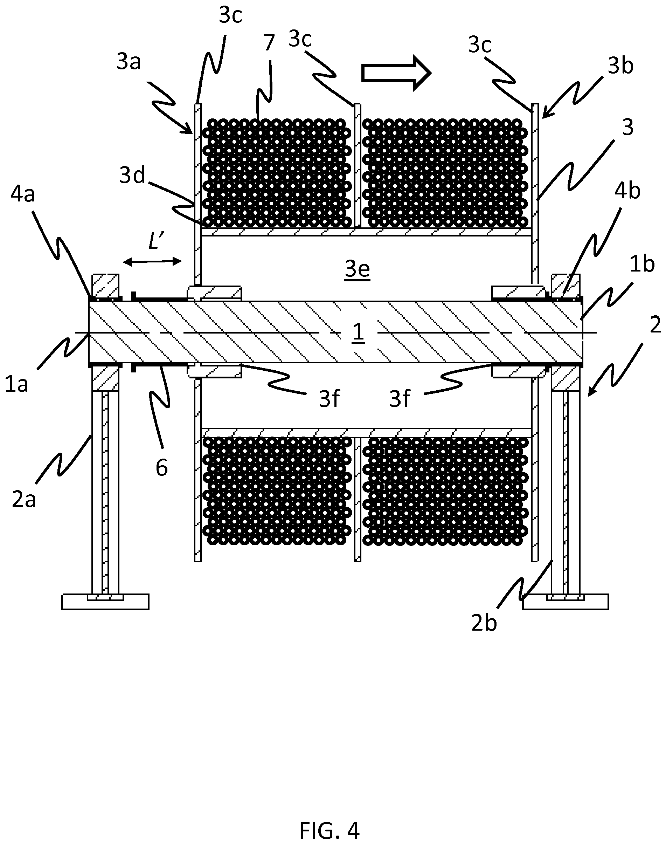

Now with particular reference to fig. 4, after having removed completely the old bushing 6 and replaced it with a new bushing (or inserted the old bushing 6 after repair / modifications), the drum 3 is slid / moved along the drum shaft 1 in the direction of the double lined arrow until the stopper 6' abuts the radially inward facing surface of the pedestal 2b, thereby forming a mirror space with length L' at the opposite side of the drum 3. The same exchange procedure may thus be performed on this side since the operator now has access to the bushing 6 via the created mirror space *L'*.

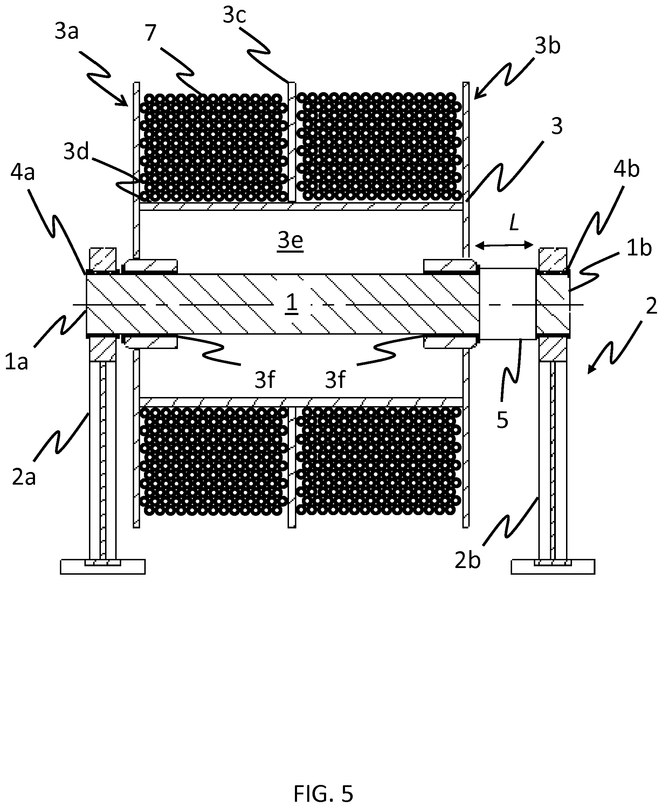

Finally, fig. 5 shows a completely assembled drum assembly where the drum 3 has been slid back to the original position, again creating the initial open space of axial length L. Into this space, an adapted spacer 5 has been added in order to prevent undesired axial movements of the drum 3. Of course, the same spacer 5 may be arranged into the mirror space *L*' at the opposite side, that is, without moving the drum 3 back to the original axial position shown in fig. 1A. Other means for preventing axial movements may also be envisaged, such as spacers 5 on both sides of the drum 3 and/or use of blocking objects having forms different from cylinder forms. An example of the latter may be a plurality of rods distributed around the circumference of the drum shaft 1. The spacer 5 should thus be interpreted as any kind of object serving the purpose of stabilising the position of the drum 3 during normal operation.

In the preceding description, various aspects of the drum assembly according to the invention have been described with reference to the illustrative embodiment. For purposes of explanation, specific numbers, systems and configurations were set forth in order to provide a thorough understanding of the drum assembly and its workings. However, this description is not intended to be construed in a limiting sense. Various modifications and variations of the illustrative embodiment, as well as other embodiments of the assembly, which are apparent to persons skilled in the art to which the disclosed subject matter pertains, are deemed to lie within the scope of the present invention, which is defined by the appended claims.

## Claims

1. A drum assembly for a mooring winch, the drum assembly comprising
- a rotatable drum shaft (1) having a rotational axis along the drum shaft (1) and
- a drum support (2) comprising
a first pedestal (2a) supporting a first axial end (1a) of the drum shaft (1) and
a second pedestal (2b) supporting a second axial end (1b) of the drum shaft (1),
**characterized in that** the drum assembly further comprises
- an axially slidable drum (3) arranged between the first and second pedestals (2a,2b), wherein both a first axial end (3a) of the drum (3) and a second axial end (3b) of the drum (3) is supported on a bushing (6) axially surrounding the drum shaft (1), wherein each bushing (6) is divided into a plurality of arcuated bushing parts (6a,6b), and wherein a drum length difference (L,L') corresponding to the minimum distance between the two pedestals minus the axial length of the drum (3) is equal or longer than the axial length of each bushing (6), thereby rendering removal from the drum shaft (1) possible.

2. The drum assembly (1) in accordance with claim 1, **characterized in that** at least one of the bushings (6) comprises
a cylindrical section (6") and
a radial section (6') oriented perpendicular to the cylindrical section (6"), wherein,
the cylindrical section (6") is arranged between the drum (3) and the drum shaft (1) and
the radial section (6') abuts the adjacent axial end (3a,3b) of the drum (3).

3. The drum assembly (1) in accordance with claim 1 or 2, **characterized in that**
the axial ends (3a,3b) of the drum (3) displays one or more threaded cavities and
each of the bushings (6) displays through-going apertures being in alignment with the threaded cavities,
wherein a threaded bolt or screw (6"') is inserted in at least one of the aligned cavity and aperture at each axial ends (3a,3b) of the drum (3), thereby creating one or more removable fixations between the bushings (6) and the drum (3).

4. The drum assembly (1) in accordance with any one of the preceding claims, **characterized in that** the axial ends (1a,1b) of the drum shaft (1) are supported on the first and second pedestals (2a,2b) via radial bearings (4a,4b).

5. The drum assembly (1) in accordance with any one of the preceding claims, **characterized in that** at least one spacer (5) is arranged on the drum shaft (1) within the open area between the drum (3) and the pedestals (2a,2b), the at least one spacer (5) having a total length equal to, or nearly equal to, the drum length difference (L,L').

6. The drum assembly (1) in accordance with any one of the preceding claims, **characterized in that** the drum (3) is in a position where the first axial end (3a) of the drum (3) and/or its respective bushing (6) abuts the first pedestal (2a) and that at least one spacer (5) is arranged on the drum shaft (1) within the area between the second axial end (3b) of the drum (3) and the second pedestal (2b).

7. The drum assembly (1) in accordance with claim 5 or 6, **characterized in that** the at least one spacer (5) is divided into a plurality of arcuated spacer parts, thereby rendering removal from the drum shaft (1) possible.

8. A method of exchanging a bushing (6) arranged between a drum (3) and a drum shaft (1) of a drum assembly in accordance with any one of claims 1-7, **characterized in that** the method comprises the following sequential steps:
A. sliding the bushing (6) arranged beneath the second axial end (3b) of the drum (3) towards the nearest pedestal (2b) of the second axial end (3b),
B. removing the bushing (6) from the drum shaft (1),
C. replacing the removed bushing (6),
D. sliding the drum (3) along the drum shaft (1) towards the opposite pedestal (2b),
E. sliding the other bushing (6) arranged beneath the first axial end (3a) of the drum (3) towards the nearest pedestal (2a) of the first axial end (3a),
F. removing the other bushing (6) from the drum shaft (1) and
G. replacing the removed other bushing (6).

9. The method in accordance with claim 8, **characterized in that** the method comprises the following step:
- removing at least one spacer (5) arranged on the drum shaft (1) in the area between the drum (3) and the pedestals (2a,2b),
wherein the at least one spacer (5) is divided into a plurality of spacer parts enabling removal of the at least one spacer (5) by removing one and one of these spacer parts from the drum shaft (1).

10. The method in accordance with claim 9, **characterized in that**
the first axial end (3a) of the drum (3) is in abutment, or near abutment, with the first pedestal (2a) and
the at least one spacer (5) is arranged on the drum shaft (1) and is covering the area between the second axial end (3b) of the drum (3) and the second pedestal (2b),
wherein the at least one spacer (5) is divided into a plurality of spacer parts enabling removal of the at least one spacer (5) by removing one and one of these spacer parts from the drum shaft (1).

11. The method in accordance with claim 10, **characterized in that** step C involves
- sliding the drum (3) from the position where the first axial end (3a) of the drum (3) is in abutment, or near abutment, with the first pedestal (2a) to a position where the second axial end (3b) of the drum (3) is in abutment, or near abutment, with the second pedestal (2b).

12. The method in accordance with any one of claims 8-11, **characterized in that** steps C and D also comprise
- inserting a new and/or modified bushing (6) as replacement for the removed bushing (6).

## Patentansprüche

1. Trommelbaugruppe für eine Mooringwinde, wobei die Trommelbaugruppe Folgendes umfasst:
- eine drehbare Trommelwelle (1), aufweisend eine Drehachse entlang der Trommelwelle (1) und
- einen Trommelträger (2), umfassend
einen ersten Sockel (2a), der ein erstes axiales Ende (1a) der Trommelwelle (1) trägt, und
einen zweiten Sockel (2b), der ein zweites axiales Ende (1b) der Trommelwelle (1) trägt,
**dadurch gekennzeichnet, dass** die Trommelbaugruppe ferner Folgendes umfasst:
- eine axial verschiebbare Trommel (3), die zwischen dem ersten und dem zweiten Sockel (2a, 2b) angeordnet ist, wobei sowohl ein erstes axiales Ende (3a) der Trommel (3) als auch ein zweites axiales Ende (3b) der Trommel (3) an einer Buchse (6) getragen werden, welche die Trommelwelle (1) axial umgibt, wobei jede Buchse (6) in eine Vielzahl von bogenförmigen Buchsenteilen (6a, 6b) unterteilt ist, und wobei eine Trommellängendifferenz (L, L'), die dem Mindestabstand zwischen den zwei Sockeln abzüglich der axialen Länge der Trommel (3) entspricht, gleich oder größer als die axiale Länge jeder Buchse (6) ist, wodurch die Entfernung von der Trommelwelle (1) ermöglicht wird.

2. Trommelbaugruppe (1) nach Anspruch 1, **dadurch gekennzeichnet, dass** mindestens eine der Buchsen (6) Folgendes umfasst:
einen zylindrischen Abschnitt (6") und
einen radialen Abschnitt (6'), der senkrecht zu dem zylindrischen Abschnitt (6") ausgerichtet ist, wobei
der zylindrische Abschnitt (6") zwischen der Trommel (3) und der Trommelwelle (1) angeordnet ist und
der radiale Abschnitt (6') an dem benachbarten axialen Ende (3a, 3b) der Trommel (3) anliegt.

3. Trommelbaugruppe (1) nach Anspruch 1 oder 2, **dadurch gekennzeichnet, dass**
die axialen Enden (3a, 3b) der Trommel (3) einen oder mehrere mit einem Gewinde versehene Hohlräume anzeigen und jede der Buchsen (6) Durchtrittsöffnungen anzeigt, die an den mit einem Gewinde versehenen Hohlräumen ausgerichtet sind,
wobei ein Gewindebolzen oder eine Gewindeschraube (6"') in mindestens einen des ausgerichteten Hohlraums und der Öffnung an jedem axialen Ende (3a, 3b) der Trommel (3) eingeführt wird, wodurch eine oder mehrere entfernbare Fixierungen zwischen den Buchsen (6) und der Trommel (3) erzeugt werden.

4. Trommelbaugruppe (1) nach einem der vorhergehenden Ansprüche, **dadurch gekennzeichnet, dass** die axialen Enden (1a, 1b) der Trommelwelle (1) über Radiallager (4a, 4b) an dem ersten und zweiten Sockel (2a, 2b) getragen werden.

5. Trommelbaugruppe (1) nach einem der vorhergehenden Ansprüche, **dadurch gekennzeichnet, dass** mindestens ein Abstandshalter (5) an der Trommelwelle (1) in dem offenen Bereich zwischen der Trommel (3) und den Sockeln (2a, 2b) angeordnet ist, wobei der mindestens eine Abstandshalter (5) eine Gesamtlänge aufweist, die gleich, oder nahezu gleich, der Trommellängendifferenz (L, L') ist.

6. Trommelbaugruppe (1) nach einem der vorhergehenden Ansprüche, **dadurch gekennzeichnet, dass** die Trommel (3) in einer Position ist, in der das erste axiale Ende (3a) der Trommel (3) und/oder ihre jeweilige Buchse (6) an dem ersten Sockel (2a) anliegt, und dass mindestens ein Abstandshalter (5) an der Trommelwelle (1) in dem Bereich zwischen dem zweiten axialen Ende (3b) der Trommel (3) und dem zweiten Sockel (2b) angeordnet ist.

7. Trommelbaugruppe (1) nach Anspruch 5 oder 6, **dadurch gekennzeichnet, dass** der mindestens eine Abstandshalter (5) in eine Vielzahl von bogenförmigen Abstandshalterteilen unterteilt ist, wodurch die Entfernung von der Trommelwelle (1) ermöglicht wird.

8. Verfahren zum Austauschen einer Buchse (6), die zwischen einer Trommel (3) und einer Trommelwelle (1) einer Trommelbaugruppe nach einem der Ansprüche 1-7 angeordnet ist, **dadurch gekennzeichnet, dass** das Verfahren die folgenden aufeinanderfolgenden Schritte umfasst:
A. Verschieben der Buchse (6), die unter dem zweiten axialen Ende (3b) der Trommel (3) angeordnet ist, zum nächstliegenden Sockel (2b) des zweiten axialen Endes (3b),
B. Entfernen der Buchse (6) von der Trommelwelle (1),
C. Ersetzen der entfernten Buchse (6),
D. Verschieben der Trommel (3) entlang der Trommelwelle (1) zum gegenüberliegenden Sockel (2b),
E. Verschieben der anderen Buchse (6), die unter dem ersten axialen Ende (3a) der Trommel (3) angeordnet ist, zu dem nächstliegenden Sockel (2a) des ersten axialen Endes (3a),
F. Entfernen der anderen Buchse (6) von der Trommelwelle (1) und
G. Ersetzen der entfernten anderen Buchse (6).

9. Verfahren nach Anspruch 8, **dadurch gekennzeichnet, dass** das Verfahren den folgenden Schritt umfasst:
- Entfernen von mindestens einem Abstandshalter (5), der an der Trommelwelle (1) in dem Bereich zwischen der Trommel (3) und den Sockeln (2a, 2b) angeordnet ist,
wobei der mindestens eine Abstandshalter (5) in eine Vielzahl von Abstandshalterteilen unterteilt ist, wodurch die Entfernung des mindestens einen Abstandshalters (5) durch das Entfernen von einem dieser Abstandshalterteile nach dem anderen von der Trommelwelle (1) ermöglicht wird.

10. Verfahren nach Anspruch 9, **dadurch gekennzeichnet, dass**
das erste axiale Ende (3a) der Trommel (3) an dem ersten Sockel (2a) anliegt oder nahezu daran anliegt und
der mindestens eine Abstandshalter (5) an der Trommelwelle (1) angeordnet ist und den Bereich zwischen dem zweiten axialen Ende (3b) der Trommel (3) und dem zweiten Sockel (2b) abdeckt,
wobei der mindestens eine Abstandshalter (5) in eine Vielzahl von Abstandshalterteilen unterteilt ist, wodurch die Entfernung des mindestens einen Abstandshalters (5) durch das Entfernen von einem dieser Abstandshalterteilen nach dem anderen von der Trommelwelle (1) ermöglicht wird.

11. Verfahren nach Anspruch 10, **dadurch gekennzeichnet, dass** zu Schritt C Folgendes gehört:
- Verschieben der Trommel (3) von der Position, in der das erste axiale Ende (3a) der Trommel (3) an dem ersten Sockel (2a) anliegt oder nahezu daran anliegt, zu einer Position, in der das zweite axiale Ende (3b) der Trommel (3) an dem zweiten Sockel (2b) anliegt oder nahezu daran anliegt.

12. Verfahren nach einem der Ansprüche 8-11, **dadurch gekennzeichnet, dass** die Schritte C und D außerdem Folgendes umfassen:
- Einführen einer neuen und/oder modifizierten Buchse (6) als Ersatz für die entfernte Buchse (6).

## Revendications

1. Ensemble tambour pour un treuil d'amarrage, l'ensemble tambour comprenant
- un arbre de tambour (1) rotatif ayant un axe de rotation le long de l'arbre de tambour (1) et
- un support de tambour (2) comprenant
un premier socle (2a) supportant une première extrémité axiale (1a) de l'arbre de tambour (1) et
un deuxième socle (2b) supportant une deuxième extrémité axiale (1b) de l'arbre de tambour (1),
**caractérisé en ce que** l'ensemble tambour comprend en outre
- un tambour (3) glissant axialement, agencé entre les premier et deuxième socles (2a, 2b), dans lequel une première extrémité axiale (3a) du tambour (3) et une deuxième extrémité axiale (3b) du tambour (3) sont toutes deux supportées sur une douille (6) entourant axialement l'arbre de tambour (1), dans lequel chaque douille (6) est divisée en une pluralité de parties de douille arquées (6a, 6b), et dans lequel une différence de longueur de tambour (L, L') correspondant à la distance minimale entre les deux socles moins la longueur axiale du tambour (3) est supérieure ou égale à la longueur axiale de chaque douille (6), rendant ainsi possible de la retirer de l'arbre de tambour (1).

2. Ensemble tambour (1) selon la revendication 1, **caractérisé en ce qu'**au moins une des douilles (6) comprend
une section cylindrique (6") et
une section radiale (6') orientée perpendiculairement à la section cylindrique (6"), dans lequel,
la section cylindrique (6") est agencée entre le tambour (3) et l'arbre de tambour (1) et
la section radiale (6') vient en butée contre l'extrémité axiale adjacente (3a, 3b) du tambour (3).

3. Ensemble tambour (1) selon la revendication 1 ou 2, **caractérisé en ce que**
les extrémités axiales (3a, 3b) du tambour (3) présentent une ou plusieurs cavités taraudées et
chacune des douilles (6) présente des ouvertures traversantes qui sont dans l'alignement des cavités taraudées,
dans lequel un boulon fileté ou une vis (6''') est inséré dans au moins l'une des cavités et ouvertures alignées à chacune des extrémités axiales (3a, 3b) du tambour (3), créant ainsi une ou plusieurs fixations amovibles entre les douilles (6) et le tambour (3).

4. Ensemble tambour (1) selon l'une quelconque des revendications précédentes, **caractérisé en ce que** les extrémités axiales (1a, 1b) de l'arbre de tambour (1) sont supportées sur les premier et deuxième socles (2a, 2b) via des paliers radiaux (4a, 4b).

5. Ensemble tambour (1) selon l'une quelconque des revendications précédentes, **caractérisé en ce qu'**au moins une entretoise (5) est agencée sur l'arbre de tambour (1) à l'intérieur de la zone ouverte entre le tambour (3) et les socles (2a, 2b), l'au moins une entretoise (5) ayant une longueur totale égale, ou presque égale, à la différence de longueur de tambour (L, L').

6. Ensemble tambour (1) selon l'une quelconque des revendications précédentes, **caractérisé en ce que** le tambour (3) est dans une position où la première extrémité axiale (3a) du tambour (3) et/ou sa douille (6) respective vient en butée contre le premier socle (2a) et **en ce qu'**au moins une entretoise (5) est agencée sur l'arbre de tambour (1) à l'intérieur de la zone entre la deuxième extrémité axiale (3b) du tambour (3) et le deuxième socle (2b).

7. Ensemble tambour (1) selon la revendication 5 ou 6, **caractérisé en ce que** l'au moins une entretoise (5) est divisée en une pluralité de parties d'entretoise arquées, rendant ainsi possible de la retirer de l'arbre de tambour (1).

8. Procédé de changement d'une douille (6) agencée entre un tambour (3) et un arbre de tambour (1) d'un ensemble tambour selon l'une quelconque des revendications 1 à 7, **caractérisé en ce que** le procédé comprend les étapes séquentielles suivantes :
A. faire glisser la douille (6) agencée sous la deuxième extrémité axiale (3b) du tambour (3) vers le socle (2b) le plus proche de la deuxième extrémité axiale (3b),
B. retirer la douille (6) de l'arbre de tambour (1),
C. replacer la douille (6) retirée,
D. faire glisser le tambour (3) le long de l'arbre de tambour (1) vers le socle (2b) opposé,
E. faire glisser l'autre douille (6) agencée sous la première extrémité axiale (3a) du tambour (3) vers le socle (2a) le plus proche de la première extrémité axiale (3a),
F. retirer l'autre douille (6) de l'arbre de tambour (1) et
G. replacer l'autre douille (6) retirée.

9. Procédé selon la revendication 8, **caractérisé en ce que** le procédé comprend l'étape suivante :
- retirer au moins une entretoise (5) agencée sur l'arbre de tambour (1) dans la zone entre le tambour (3) et les socles (2a, 2b),
dans lequel l'au moins une entretoise (5) est divisée en une pluralité de parties d'entretoise permettant de retirer l'au moins une entretoise (5) en retirant ces parties d'entretoise une à une de l'arbre de tambour (1).

10. Procédé selon la revendication 9, **caractérisé en ce que**
la première extrémité axiale (3a) du tambour (3) vient en butée, ou presque en butée, contre le premier socle (2a) et
l'au moins une entretoise (5) est agencée sur l'arbre de tambour (1) et couvre la zone entre la deuxième extrémité axiale (3b) du tambour (3) et le deuxième socle (2b),
dans lequel l'au moins une entretoise (5) est divisée en une pluralité de parties d'entretoise permettant de retirer l'au moins une entretoise (5) en retirant ces parties d'entretoise une à une de l'arbre de tambour (1).

11. Procédé selon la revendication 10, **caractérisé en ce que** l'étape C implique de
- faire glisser le tambour (3) de la position où la première extrémité axiale (3a) du tambour (3) vient en butée, ou presque en butée, contre le premier socle (2a), à une position où la deuxième extrémité axiale (3b) du tambour (3) vient en butée, ou presque en butée, contre le deuxième socle (2b).

12. Procédé selon l'une quelconque des revendications 8 à 11, **caractérisé en ce que** les étapes C et D comprennent également
- l'insertion d'une douille (6) neuve et/ou modifiée comme remplacement de la douille (6) retirée.
